# EUROPEAN PATENT APPLICATION

(11) **EP 4 815 143 A1**
(43) Date of publication of application: **30.09.2026**
(21) Application number: 24909872.4
(22) Date of filing: 20.08.2024
(51) Int. Cl.: H01M 50/242, H01M 50/204, H01M 50/244, H02J 3/32

(54) **ENERGY STORAGE CABINET, ENERGY STORAGE SYSTEM, BATTERY PACK, AND BATTERY SUPPORT**

(30) Priority: 26.12.2023 CN 202323560749 U
(71) Applicant: Huawei Digital Power Technologies Co., Ltd., Shenzhen, Guangdong 518043 (CN)
(72) Inventor: XIE, Qiwu, Shenzhen, Guangdong 518043 (CN); JIANG, Zhishun, Shenzhen, Guangdong 518043 (CN); YAN, Xinzhong, Shenzhen, Guangdong 518043 (CN)
(74) Representative: Isarpatent
(86) International application number: PCT/CN2024/113450
(87) International publication number: WO 2025/138922

(57) **Abstract**

Provided are an energy storage cabinet (100), an energy storage system, a battery pack (200), and a battery support. The energy storage cabinet (100) includes a cabinet body (110), a battery pack (200), and two guide rails (140) disposed opposite to each other in a length direction (X) of the cabinet body (110). The cabinet body (110) is configured to accommodate the guide rail (140) and the battery pack (200). The cabinet body (110) is provided with a cabinet door. The two guide rails (140) extend in a width direction (Y) of the cabinet body (110). Each of the two guide rails (140) is provided with a groove (141) extending in the width direction (Y), and openings of the grooves (141) are opposite to each other and face the cabinet body (110). An opening width that is of the groove (141) in a height direction (Z) of the cabinet body (110) and that is at one end of the guide rail (140) close to the cabinet door is greater than an opening width that is of the groove (141) and that is at the other end of the guide rail (140). Protruding limiting blocks (220) are disposed on surfaces of two side walls of the battery pack (200). The limiting blocks (220) are clamped into the groove (141). A portion that is of the groove (141) and at which the opening width narrows is configured to abut against the limiting block (220) in the width direction (Y). The guide rail (140) may provide a constraint in the width direction (Y) for the battery pack (200), to limit displacement of the battery pack (200) in a horizontal direction, so that damage to the battery pack (200) and the energy storage cabinet (100) caused by vibration of the battery pack (200) during transportation can be avoided.

## Description

### CROSS-REFERENCE TO RELATED APPLICATIONS

This application claims priority to Chinese Patent Application No. 202323560749.5, filed with the China National Intellectual Property Administration on December 26, 2023 and entitled "ENERGY STORAGE CABINET, ENERGY STORAGE SYSTEM, BATTERY PACK, AND BATTERY SUPPORT", which is incorporated herein by reference in its entirety.

### TECHNICAL FIELD

This application relates to the energy field, and in particular, to an energy storage cabinet, an energy storage system, a battery pack, and a battery support.

### BACKGROUND

Products such as energy storage cabinets and energy storage boxes gradually evolve toward higher energy density. As a result, a quantity of cells included in a single energy storage battery pack gradually increases, and a size and a weight of the single energy storage battery pack also gradually increase. The energy storage battery pack usually has a length exceeding 2 m and a weight exceeding 700 kg. Due to the large size and heavy weight of the battery pack, the battery pack causes great vibration and an impact force on a cabinet body of an energy storage cabinet or a mounting rack of the battery pack during palletized transportation.

A guide rail on the cabinet body of the energy storage cabinet or the mounting rack of the battery pack usually fastens the carried battery pack from the front, lacking constraints on the tail and a middle section of the battery pack. The guide rail cannot fasten the heavy battery pack firmly enough, making it impossible to resolve the problem of vibration of the battery pack during transportation causing damage to the battery pack and the energy storage cabinet.

### SUMMARY

This application provides an energy storage cabinet, an energy storage system, a battery pack, and a battery support. A guide rail including accommodation spaces of different shapes is disposed on the energy storage cabinet, to provide a binding force in a width direction for the battery pack, so that damage to the battery pack and the energy storage cabinet caused by vibration of the battery pack can be avoided.

According to a first aspect, this application provides an energy storage cabinet. The energy storage cabinet includes a cabinet body, a battery pack, and two guide rails disposed opposite to each other in a length direction of the cabinet body. The cabinet body is configured to accommodate the guide rail and the battery pack. The cabinet body is provided with a cabinet door. The two guide rails extend in a width direction of the cabinet body. Each of the two guide rails is provided with a groove extending in the width direction, and openings of the grooves are opposite to each other and face the cabinet body. An opening width that is of the groove in a height direction of the cabinet body and that is at one end of the guide rail close to the cabinet door is greater than an opening width that is of the groove and that is at the other end of the guide rail. Protruding limiting blocks are disposed on surfaces of two side walls of the battery pack. The limiting blocks are clamped into the groove. A portion that is of the groove and at which the opening width narrows is configured to abut against the limiting block in the width direction.

In the technical solution provided in this application, after the battery pack is pushed into the energy storage cabinet, the limiting block on the side wall of the battery pack may be clamped into the groove of the guide rail of the energy storage cabinet. The portion that is of the groove and at which the opening width narrows abuts against the limiting block in the width direction. The guide rail may provide a constraint in the width direction for the battery pack, that is, limit displacement of the battery pack in the horizontal width direction. This can resolve the problem of fastening the battery pack during transportation, thereby avoiding damage to the battery pack and the energy storage cabinet caused by vibration of the battery pack during transportation can be avoided.

In a possible implementation, an orthographic projection of the groove in the length direction is step-shaped, and an orthographic projection of the limiting block in the length direction is step-shaped. A shape of the limiting block matches a shape of the groove, so that the limiting block of the battery pack can be clamped in the groove, thereby enhancing fastening strength of the battery pack.

In a possible implementation, the portion that is of the groove and at which the opening width narrows is configured to abut against the limiting block in the height direction. The guide rail may provide a constraint in the height direction for the battery pack, that is, limit displacement of the battery pack in the horizontal width direction.

In a possible implementation, the energy storage cabinet includes a fixing piece. The fixing piece is located at the one end that is of the guide rail and that is close to the cabinet door. The fixing piece is separately fastened to the guide rail and a side wall that is of the battery pack and that faces the cabinet door. The battery pack is fastened to the guide rail to improve stability of the battery pack.

In a possible implementation, each guide rail includes a baffle. The baffle is disposed in parallel with a rear wall of the battery pack. The baffle is located at the other end that is of the guide rail and that is away from the cabinet door. The baffle is provided with a positioning hole. A positioning pin is disposed on a side wall that is of the battery pack and that faces the baffle, and the positioning pin passes through the positioning hole. An orthographic projection of the positioning hole in the Y direction covers an orthographic projection of the positioning pin in the Y direction. A hole diameter of the positioning hole is greater than or equal to a diameter of the positioning pin. A ground axis of the positioning hole is parallel to the Y direction. The positioning hole provides a binding force in a circumferential direction for the positioning pin on the rear wall of the battery pack, thereby further limiting vibration of the battery pack during transportation, and enhancing a fastening force between the battery pack and the guide rail.

In a possible implementation, the guide rail includes a bottom plate, a first top plate, and a limiting plate. The first top plate and the bottom plate are disposed in parallel with each other in the height direction. In each guide rail, a position of the first top plate and a position of the limiting plate are higher than a position of the bottom plate in the height direction. The first top plate is connected to the limiting plate. The limiting plate tilts toward the bottom plate. A maximum distance between the limiting plate and the bottom plate is equal to a distance between the first top plate and the bottom plate. The limiting block is located between the limiting plate and the first top plate. The limiting block includes a bottom surface and a limiting surface. The bottom surface is parallel to the bottom plate. In the limiting block, a position of the limiting surface is higher than a position of the bottom surface in the height direction. The limiting surface and the limiting plate are disposed in parallel with each other. A minimum distance between the limiting plate and the bottom plate is greater than or equal to a minimum distance between the limiting surface and the bottom plate. The limiting plate tilts toward the bottom plate. In other words, an included angle between the limiting plate and the bottom plate is an acute angle. An accommodation space shaped like a wedge is formed between the limiting plate and the bottom plate. Correspondingly, the limiting surface and the limiting plate are disposed in parallel with each other, and the limiting block is a wedge-shaped limiting block. In the battery pack, after the limiting block of the battery pack slides into the groove, the limiting block better cooperates with the groove. The wedge-shaped limiting block is located in wedge-shaped limiting space of the groove. The limiting surface is subject to a binding force of the limiting plate, and provides a component force in a reverse direction of the width direction and a component force in a reverse direction of the height direction for the limiting surface. This limits vibration of the battery pack in the width direction and the height direction, and improves stability of the battery pack.

In a possible implementation, a compression member is disposed between the limiting plate and the limiting surface. There is no gap between the limiting plate and the limiting surface. The compression member enables the limiting surface to better and more evenly accept the binding force of the limiting plate.

In a possible implementation, the limiting block includes a first top surface. The first top surface is disposed opposite to the first top plate. The first top surface is connected to the limiting surface. A distance between the first top surface and the bottom surface is equal to a maximum distance between the limiting surface and the bottom surface. The first top surface is located between the first top plate and the bottom plate. The first top surface is disposed opposite to the bottom surface. After the battery pack is installed at a proper position, the limiting block is clamped in the groove to increase a fastening force of the battery pack.

In a possible implementation, the guide rail includes a second top plate. The second top plate is connected to the limiting plate. The second top plate and the bottom plate are disposed in parallel with each other. A distance between the second top plate and the bottom plate is less than the distance between the first top plate and the bottom plate. An orthographic projection of the limiting plate in the height direction is located between an orthographic projection of the first top plate in the height direction and an orthographic projection of the second top plate in the height direction.

In a possible implementation, the limiting block includes a second top surface. The second top surface is located between the second top plate and the bottom plate. The second top surface is connected to the limiting surface. The second top surface and the bottom surface are disposed in parallel with each other. A distance between the second top surface and the bottom surface is less than a distance between the third limiting surface and the bottom surface. The orthographic projection of the limiting plate in the height direction covers an orthographic projection of the limiting surface in the height direction.

In a possible implementation, the guide rail includes two limiting plates. The two limiting plates are sequentially arranged in the width direction. The second top plate is connected between the two limiting plates. A minimum distance between one of the two limiting plates and the bottom plate is equal to a maximum distance between the other limiting plate and the bottom plate. In other words, an opening height of the groove of the guide rail in the width direction gradually decreases. A plurality of accommodation spaces shaped like wedges are formed in the groove of the guide rail, and a plurality of limiting positions are formed, so that the battery pack is locked inside the energy storage cabinet. This facilitates convenient installation of the battery pack, ensures a stable installation position of the battery pack, and enhances stability of the energy storage cabinet.

In a possible implementation, the other limiting plate is disposed at the end that is of the guide rail and that is away from the cabinet door. In other words, the other limiting plate is disposed at a tail of the guide rail, to limit the tail of the battery pack.

In a possible implementation, the guide rail includes a side plate. The side plate extends in the width direction. The side plate is perpendicular to and connected to the bottom plate and the limiting plate. The side plate is provided with a plurality of through holes, and the plurality of through holes are provided at spacings in the width direction. An overall weight of the guide rail can be reduced through disposition of the through hole, without affecting overall strength of the guide rail.

In a possible implementation, a pulley is disposed on a bottom wall of the battery pack. The pulley can reduce friction between the bottom wall of the battery pack and the bottom plate, reduce a rate of wear between the battery pack and the guide rail, and improve installation efficiency. The bottom plate is provided with a limiting groove. The limiting groove is recessed toward a side that is of the bottom plate and that is away from the bottom wall of the battery pack. The limiting groove is configured to accommodate the pulley. A depth of the limiting groove is greater than or equal to a height by which the pulley protrudes from the bottom wall of the battery pack. The limiting groove may provide an accommodation space for the pulley, and the bottom wall of the battery pack is attached to the bottom plate of the guide rail. This avoids presence of a gap between the bottom wall of the battery pack and the bottom plate of the groove due to the pulley, thereby avoiding tilt of the battery pack.

In a possible implementation, the limiting groove includes a bottom wall and two side walls. The bottom wall is connected between the two side walls. An included angle between one side wall in the two side walls and the bottom wall is an obtuse angle, and the other side wall is closer to the baffle than the side wall in the two side walls. During installation of the battery pack into the energy storage cabinet, the pulley rolls through the tilted side wall to the bottom wall, so that the pulley enters the limiting groove. This ensures that the battery pack moves smoothly, thereby avoiding damage to the battery pack and the guide rail can be avoided. When the battery pack is pulled out from the energy storage cabinet, the pulley rolls through the tilted side wall to the bottom plate, so that the pulley exits the limiting groove. This ensures that the battery pack can be easily pulled out.

In a possible implementation, the pulley is disposed on an edge that is of a bottom wall of the battery pack and that is close to the rear wall of the battery pack. Correspondingly, the limiting groove is also disposed at the bottom plate at the end that is of the guide rail and that is away from the cabinet door.

In a possible implementation, the cabinet body includes a plurality of columns of posts arranged at spacings in the length direction. Each column of posts includes a plurality of posts. The plurality of posts extend in the height direction. A plurality of battery packs are stacked between two adjacent columns of posts. A plurality of guide rails are disposed on each of the two adjacent columns of posts. The guide rails on the two adjacent columns of posts are mirror-symmetric in the length direction. The plurality of guide rails are configured to fasten the plurality of battery packs. The side plate is fastened to the plurality of posts. The post provides support that is vertical to a horizontal plane for the guide rail, thereby supporting the battery pack on the horizontal plane and improving mechanical strength of the energy storage cabinet.

According to a second aspect, this application further provides an energy storage system. The energy storage system includes the energy storage cabinet in the first aspect and a power converter. The power converter is configured to: convert an alternating current output by an external alternating current power supply into a direct current, and output the direct current to the energy storage cabinet; and/or the power converter is configured to: convert a direct current output by the energy storage cabinet into an alternating current, and output the alternating current to a load or a power grid.

According to a third aspect, this application further provides a battery pack. The battery pack includes a housing and a plurality of batteries. The housing is configured to accommodate the plurality of batteries. A limiting block is disposed on an outer wall of the housing. The limiting block includes a bottom surface and a limiting surface. In the battery pack, a position of the limiting surface is higher than a position of the bottom surface in a height direction of the battery pack. The limiting surface tilts toward the bottom surface.

In a possible implementation, the limiting block includes a first top surface. The first top surface and the bottom surface are disposed in parallel with each other in the height direction. The first top surface is connected to the limiting surface. A distance between the first top surface and the bottom surface is equal to a maximum distance between the first top surface and the limiting surface and the bottom surface.

In a possible implementation, the limiting block includes a second top surface. The second top surface is connected to the limiting surface. The second top surface and the bottom surface are disposed in parallel with each other. A distance between the second top surface and the bottom surface is less than a distance between the third limiting surface and the bottom surface.

According to a fourth aspect, this application further provides a battery support. The battery support includes two guide rails that are mirror-symmetric in a first direction. Each of the two guide rails extends in a second direction. Each of the two guide rails includes a top plate, a limiting plate, and a bottom plate. The top plate and the bottom plate are disposed in parallel with each other in a third direction. In the energy storage cabinet, a position of the limiting plate and a position of the top plate are higher than a position of the bottom plate in the third direction. The limiting plate is connected to the top plate. The limiting plate tilts toward the bottom plate. A maximum distance between the limiting plate and the bottom plate is equal to a distance between the bottom plate and the top plate. A minimum distance between the limiting plate and the bottom plate is greater than 0. The first direction, the second direction, and the third direction are perpendicular to each other.

For beneficial effects of the second aspect to the fourth aspect, refer to the descriptions of the beneficial effects of the first aspect. Details are not described herein again.

### BRIEF DESCRIPTION OF DRAWINGS

FIG. 1 is a diagram of an application scenario of an energy storage cabinet according to this application;
FIG. 2 is a diagram of a structure of an energy storage cabinet according to this application;
FIG. 3 is a diagram of assembling a battery pack and a guide rail in an energy storage cabinet according to this application;
FIG. 4 is a diagram of a structure of a guide rail in an energy storage cabinet according to this application;
FIG. 5 is a diagram of a structure of a battery pack according to this application;
FIG. 6 is a diagram of another structure of a battery pack according to this application;
FIG. 7 is a diagram of another structure of a guide rail in an energy storage cabinet according to this application;
FIG. 8 is a front view of a guide rail of an energy storage cabinet according to this application;
FIG. 9 is a side view of a battery pack according to this application;
FIG. 10 is a cross-sectional view of a guide rail and a battery pack when the battery pack is installed at a position B in FIG. 4;
FIG. 11 is a cross-sectional view of a guide rail and a battery pack when the battery pack is installed at a position C in FIG. 4;
FIG. 12 is a diagram of assembling a fixing piece and a guide rail when a battery pack is installed at a position A in FIG. 4; and
FIG. 13 is a diagram of a structure of a fixing piece in an energy storage cabinet according to this application.

Reference numerals:
100: energy storage cabinet; 300: DC/DC converter; 400: inverter; 500: power grid; 600: load; 700: photovoltaic panel; 110: cabinet body; 140: guide rail; 150: post; 141: bottom plate; 142: limiting plate; 1421: compression member; 143: first top plate; 144: second top plate; 145: fixing piece; 1451: first bending part; 14511: screw hole; 1452: second bending part; 1453: screw; 146: baffle; 1461: positioning hole; 147: limiting groove; 1471: bottom wall; 1472: side wall; 148: side plate; 1481: through hole; 141: groove; 200: battery pack; 210: housing; 220: limiting block; 221: bottom surface; 222: limiting surface; 223: first top surface; 224: second top surface; 225: front wall; 230: pulley; 226: rear wall; 227: positioning pin.

### DESCRIPTION OF EMBODIMENTS

To make the objectives, technical solutions, and advantages of this application clearer, the following further describes embodiments of this application in detail with reference to the accompanying drawings. However, example implementations may be implemented in a plurality of forms, and should not be construed as being limited to the implementations described herein. Identical reference numerals in the accompanying drawings denote identical or similar structures. Therefore, repeated description thereof is omitted. Expressions of positions and directions in embodiments of this application are described by using the accompanying drawings as an example. However, changes may also be made as required, and all the changes fall within the protection scope of this application. The accompanying drawings in embodiments of this application are merely used to illustrate a relative position relationship and do not represent an actual scale.

Specific details are described in the following descriptions to facilitate understanding of this application. However, embodiments of this application may be implemented in a plurality of manners different from those described herein, and a person skilled in the art may make similar promotion without violating the connotation of embodiments of this application. Therefore, this application is not limited to specific implementations disclosed below.

The following embodiments of this application provide an energy storage cabinet. The energy storage cabinet may be used in an energy storage application scenario of new energy power generation such as photovoltaic power generation.

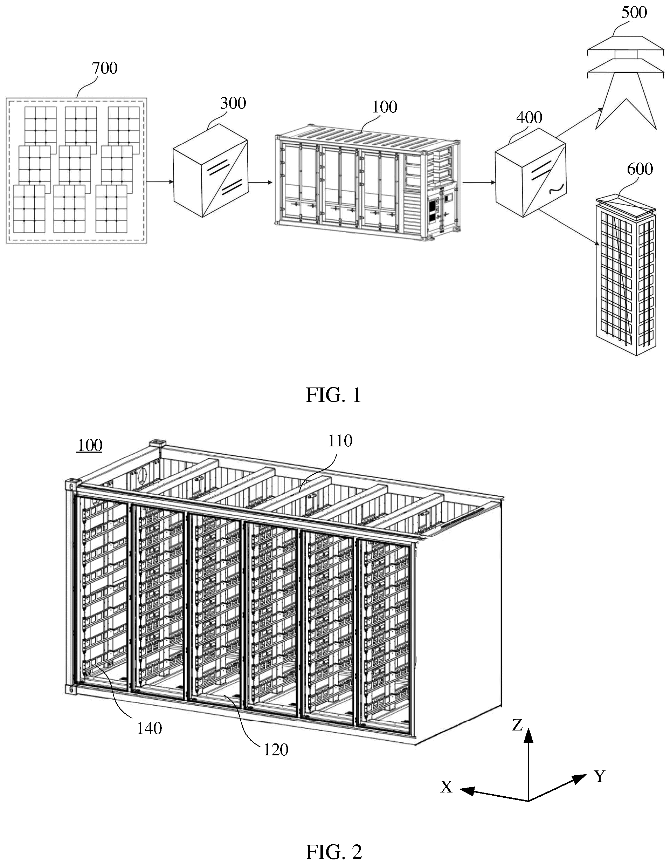

For example, FIG. 1 is a diagram of a framework structure of a photovoltaic system. As shown in FIG. 1, the photovoltaic system includes photovoltaic panels 700, a direct current/direct current converter 300, an energy storage cabinet 100, and a direct current/alternating current converter 400. The photovoltaic panel 700 is configured to convert solar energy into direct current energy. The direct current/direct current converter 300 is configured to convert a direct current generated by the photovoltaic panel 700 into an adjustable direct current, to dynamically control the direct current generated by the photovoltaic panel 200, balance output power of each photovoltaic panel 700, and then output the direct current to the energy storage cabinet 100 for electric energy storage. The direct current output by the energy storage cabinet 300 is converted into an alternating current by using the direct current/alternating current converter 400, and the alternating current is output to a power grid 500. The alternating current output by the direct current/alternating current converter may be further used to supply power to a load 600. The load 600 may be an electric device in an industrial park.

To satisfy an existing large-capacity energy storage requirement, the energy storage cabinet 100 includes a plurality of battery packs. During installation of a battery pack, after the battery pack is installed from a cabinet door of the energy storage cabinet to a battery support inside the energy storage cabinet, a fastening measure is taken on a surface that is of the battery pack and that faces the cabinet door, and a tail and a middle section of the battery pack are not restricted. As a result, the battery pack is prone to vibration during transportation, which may damage the battery pack and energy storage cabinet. Based on this, embodiments of this application provide an energy storage cabinet, to provide a binding force for the battery pack. This can limit vibration of the battery pack during transportation, thereby avoiding damage to the battery pack and the energy storage cabinet during transportation or in daily use.

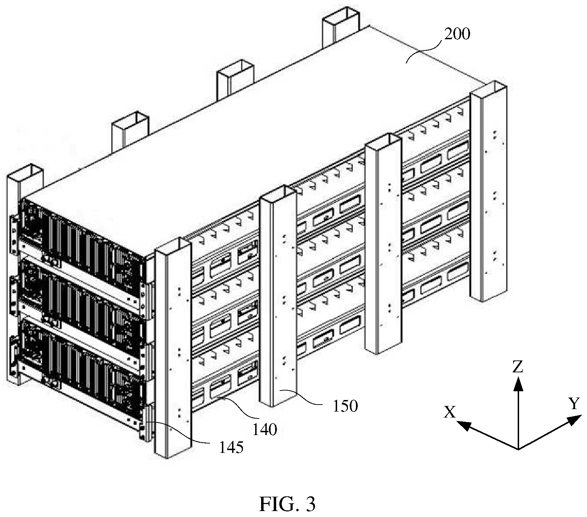

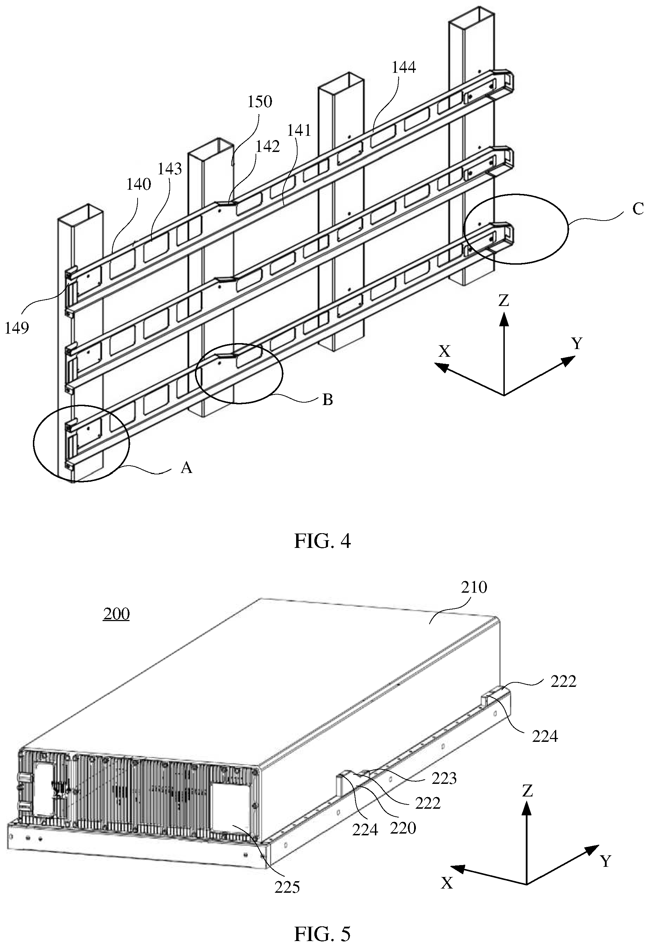

An embodiment of this application provides an energy storage cabinet 100. For a structure of the energy storage cabinet 100, refer to a diagram of a structure of the energy storage cabinet 100 shown in FIG. 2, a diagram of assembling a battery pack 200 and a guide rail 140 shown in FIG. 3, and a diagram of a structure of the guide rail 140 shown in FIG. 4. For coordinate directions shown in the following figures, a direction indicated by an X-axis represents a length direction of the energy storage cabinet 100, a direction indicated by a Y-axis represents a width direction of the energy storage cabinet 100, and a direction indicated by a Z-axis represents a height direction of the energy storage cabinet 100.

Refer to FIG. 2 to FIG. 4. The energy storage cabinet 100 includes a cabinet body 110. A plurality of battery compartments 120 arranged in an X direction are disposed in the cabinet body 110. A column of battery clusters are disposed in each battery compartment 120. A battery cluster includes a plurality of battery packs 200, and the battery packs 200 may be stacked. It should be noted that the energy storage cabinet 100 provided in this embodiment of this application may alternatively include one battery compartment 120. In other words, the energy storage cabinet 100 includes only one column of battery clusters. A size and dimensions of the energy storage cabinet 100 may be randomly selected according to an actual requirement. A plurality of pairs of guide rails 140 that are disposed opposite to each other in the X direction are disposed on two side walls of each battery compartment 120 that are disposed opposite to each other in the X direction, and each pair of guide rails 140 includes two guide rails 140. The cabinet body 110 is configured to accommodate the guide rail 140 and the battery pack 200. The cabinet body 110 (not shown in the figure) is provided with a cabinet door. The cabinet door is located at an opening of the energy storage cabinet 100. The two guide rails 140 extend in a Y direction, and the two guide rails 140 are mirror-symmetric in the X direction. Each guide rail 140 is provided with a groove 141 extending in the Y direction. Openings of the grooves 141 are opposite to each other and face the cabinet body 110. An opening width that is of the groove 141 in a Z direction and that is at one end of the guide rail 140 close to the cabinet door is greater than an opening width that id of the groove 141 and that is at the other end of the guide rail 140. Each pair of mirror-symmetric guide rails 140 may carry one battery pack 200.

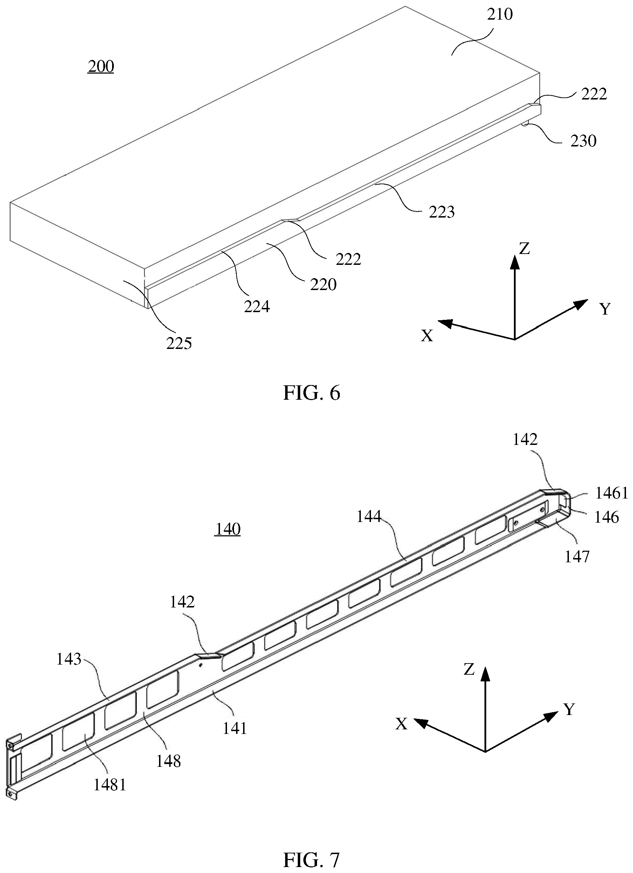

Correspondingly, for a structure of the battery pack 200 provided in this embodiment of this application, refer to a diagram of a structure of the battery pack 200 shown in FIG. 5 or FIG. 6. The battery pack 200 includes a housing 210 and a plurality of batteries, and the housing 210 is configured to accommodate the plurality of batteries. Protruding limiting blocks 220 are disposed on surfaces of two side walls of the battery pack 200 that are disposed opposite to each other in the X direction. When the battery pack 200 is installed in the energy storage cabinet 100, the limiting block 220 of the battery pack 200 may be clamped into the groove 141, and the limiting block 220 slides into the groove 141 of the guide rail 140. Because opening widths of the groove 141 in the Y direction are different, a portion that is of the groove 141 and at which the opening width narrows may abut against the limiting block 220 in the Y direction. When the limiting block 220 of the battery pack 200 slides to the portion that is of the groove 141 and at which the opening width narrows, the limiting block 220 can be better clamped. This can provide a constraint in the Y direction for the battery pack 200, that is, limit displacement of the battery pack 200 in the Y direction, so that the problem of fastening the battery pack 200 during transportation can be resolved, and damage to the battery pack 200 and the energy storage cabinet 100 caused by vibration of the battery pack 200 during transportation can be avoided.

In an embodiment, an orthographic projection of the groove 141 in the length direction is step-shaped, and an orthographic projection of the limiting block 220 in the length direction is step-shaped. A shape of the limiting block 220 matches a shape of the groove 141. Both the limiting block 220 and the groove 141 are step-shaped, so that the limiting block 220 of the battery pack 200 can be clamped in the groove 141, thereby enhancing fastening strength of the battery pack 200.

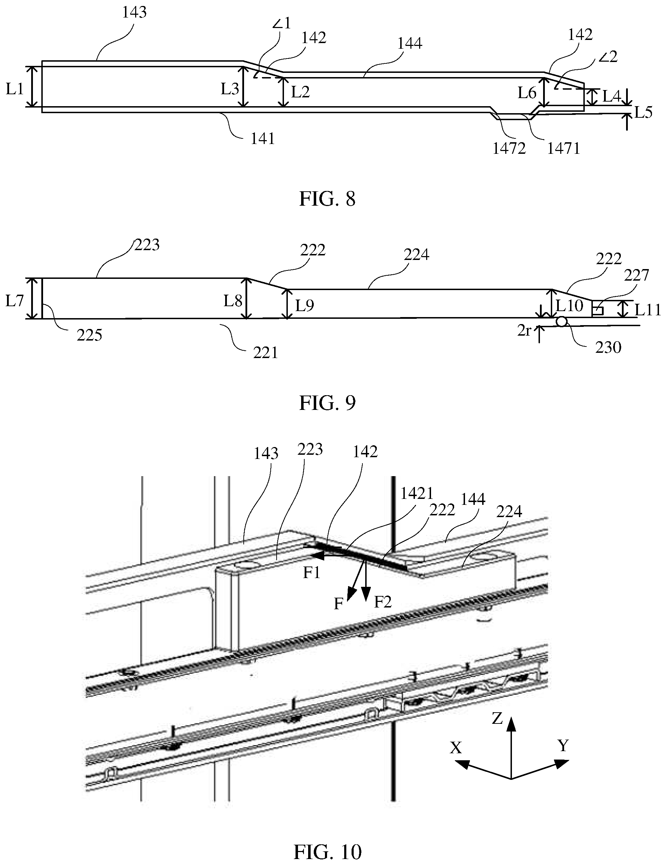

In an embodiment, the portion that is of the groove 141 and at which the opening width narrows is configured to abut against the limiting block 220 in the Z direction. During implementation, for the structure of the guide rail 140, refer to a diagram of a structure of the guide rail 140 shown in FIG. 7 and a front view of the guide rail 140 shown in FIG. 8. The guide rail 140 includes a bottom plate 141, a first top plate 143, and a limiting plate 142. The bottom plate 141 extends in the Y direction. A length of the bottom plate 141 in the Y direction is greater than a length of the first top plate 143 and a length of the limiting plate 142 in the Y direction. The first top plate 143 and the bottom plate 141 are disposed in parallel with each other in the Z direction. In each guide rail 140, a position of the first top plate 143 and a position of the limiting plate 142 are higher than a position of the bottom plate 141 in the Z direction. The first top plate 143 is connected to the limiting plate 142. The limiting plate 142 tilts toward the bottom plate 141. A maximum distance L3 between the limiting plate 142 and the bottom plate 141 is equal to a distance L1 between the first top plate 143 and the bottom plate 141. In other words, an accommodation space shaped like a wedge is formed between the limiting plate 142 and the bottom plate 141. It should be noted that the limiting plate 142 may be a plane, or may be a curved surface.

FIG. 9 is a front view of a limiting block 220 in the battery pack 200 shown in FIG. 6. The limiting block 220 includes a bottom surface 221 and a limiting surface 222. The bottom surface 221 is parallel to the bottom plate 141. In the limiting block 220, a position of the limiting surface 222 is higher than a position of the bottom surface 221 in the Z direction. The limiting surface 222 and the limiting plate 142 are disposed in parallel with each other. A minimum distance L2 between the limiting plate 142 and the bottom plate 141 is greater than or equal to a minimum distance L9 between the limiting surface 222 and the bottom plate 141. The limiting block 220 includes a first top surface 223. The first top surface 223 is disposed opposite to the first top plate 143. The first top surface 223 is connected to the limiting surface 222. A distance L7 between the first top surface 223 and the bottom surface 221 is equal to a maximum distance L8 between the limiting surface 222 and the bottom surface 221. Refer to FIG. 8 and FIG. 9. The shape of the groove 141 is the same as the shape of the limiting block 220 of the battery pack 200, so that in the battery pack 200, after the limiting block 220 of the battery pack 200 slides into the groove 141, the limiting block 220 can better cooperate with the groove 141. It should be noted that the limiting plate 142 and the limiting surface 222 need to have a same shape. When the limiting plate 142 is a plane, the limiting surface 222 is also a plane. When the limiting plate 142 is a curved surface, the limiting surface 222 is also a curved surface.

In an embodiment, the guide rail 140 includes a bottom plate 141, a first top plate 143, and a limiting plate 142. The bottom plate 141 extends in the Y direction. A length of the bottom plate 141 in the Y direction is greater than a length of the first top plate 143 and a length of the limiting plate 142 in the Y direction. The first top plate 143 and the bottom plate 141 are not disposed in parallel with each other in the Z direction. In each guide rail 140, a position of the first top plate 143 and a position of the limiting plate 142 are higher than a position of the bottom plate 141 in the Z direction. The first top plate 143 is connected to the limiting plate 142. The limiting plate 142 tilts toward the bottom plate 141. A maximum distance between the limiting plate 142 and the bottom plate 141 is equal to a minimum distance between the first top plate 143 and the bottom plate 141. Correspondingly, the first top surface 223 of the limiting block 220 of the battery pack 200 is not disposed in parallel with the bottom surface 221. The first top surface 223 of the limiting block 220 of the battery pack 200 is disposed in parallel with the first top plate 143. The bottom surface 221 of the limiting block 220 of the battery pack 200 is disposed in parallel with and attached to the bottom plate 141 of the guide rail 140.

FIG. 10 is a cross-sectional view of a guide rail 140 and a battery pack 200 when the battery pack 200 is installed at a position B in FIG. 4. After the battery pack 200 is installed in the guide rail 140, the limiting block 220 is located between the limiting plate 142 and the first top plate 143. The limiting surface 222 is subject to a binding force F of the limiting plate 142. F is decomposed into a component force F1 in a reverse direction of the Y direction and a component force F2 in a reverse direction of the Z direction. The limiting surface 222 is subject to the binding force F, so that vibration of the battery pack 200 in the Y direction and in the Z direction is limited.

Refer to FIG. 8 and FIG. 10. In an embodiment, an included angle ∠1 between the limiting plate 142 of the guide rail 140 and a horizontal plane at which the Y direction is located is an acute angle, so that an accommodation space shaped like a wedge is formed between the limiting plate 142 and the bottom plate 141. If ∠1 is excessively large, F2 is excessively small, and vibration of the battery pack 200 cannot be properly restricted in the Z direction. If ∠2 is excessively small, F1 is excessively small, and vibration of the battery pack 200 cannot be properly restricted in the Y direction. Therefore, ∠1 needs to be controlled within a proper range, for example, may be from 15° to 60°.

In an embodiment, after the battery pack 200 slides to a proper position, to enable the limiting surface 222 to better and more evenly accept the binding force of the limiting plate 142, a compression member 1421 is disposed between the limiting plate 142 and the limiting surface 222. For a position of the compression member 1421, refer to FIG. 10. After the battery pack 200 slides to the proper position, because the compression member 1421 is disposed, the limiting plate 142 is in close contact with a surface of the compression member 1421, and the limiting surface 222 is in close contact with the other surface of the compression member 1421, so that there is no gap between the limiting plate 142 and the limiting surface 222, and stability of the limiting block 220 of the battery pack 200 in the groove 141 is ensured.

In an embodiment, the guide rail 140 includes a second top plate 144. The second top plate 144 is connected to the limiting plate 142. The second top plate 144 and the bottom plate 141 are disposed in parallel with each other. A distance between the second top plate 144 and the bottom plate 141 is less than the distance between the first top plate 143 and the bottom plate 141. An orthographic projection of the limiting plate 142 in the Z direction is located between an orthographic projection of the first top plate 143 in the Z direction and an orthographic projection of the second top plate 144 in the Z direction. The limiting plate 142 is tilted. A higher end of the limiting plate 142 is connected to the first top plate 143, and a lower end of the limiting plate 142 is connected to the second top plate 144.

Correspondingly, the limiting block 220 of the battery pack 200 includes a second top surface 224. The second top surface 224 is located between the second top plate 144 and the bottom plate 141. The second top surface 224 is connected to the limiting surface 222. The second top surface 224 and the bottom surface 221 are disposed in parallel with each other. A distance between the second top surface 224 and the bottom surface 221 is less than a distance between the third limiting surface 222 and the bottom surface 221. The orthographic projection of the limiting plate 142 in the Z direction covers an orthographic projection of the limiting surface 222 in the Z direction.

In an embodiment, the guide rail 140 includes a second top plate 144. The second top plate 144 is connected to the limiting plate 142. The second top plate 144 and the bottom plate 141 are not disposed in parallel with each other. A distance between the second top plate 144 and the bottom plate 141 is less than the distance between the first top plate 143 and the bottom plate 141. An orthographic projection of the limiting plate 142 in the Z direction is located between an orthographic projection of the first top plate 143 in the Z direction and an orthographic projection of the second top plate 144 in the Z direction. The limiting plate 142 is tilted. A higher end of the limiting plate 142 is connected to the first top plate 143, and a lower end of the limiting plate 142 is connected to the second top plate 144. Correspondingly, the second top surface 224 of the limiting block 220 of the battery pack 200 is not disposed in parallel with the bottom surface 221. The second top surface 224 of the limiting block 220 of the battery pack 200 is disposed in parallel with the second top plate 144. The bottom surface 221 of the limiting block 220 of the battery pack 200 is disposed in parallel with and attached to the bottom plate 141 of the guide rail 140.

Further, to enhance fastening between the limiting block 220 and the guide rail 140, the guide rail 140 may include two limiting plates 142, and the two limiting plates 142 are sequentially arranged in the Y direction. For the structure of the guide rail 140, refer to FIG. 7 and FIG. 8. The second top plate 144 is connected between the two limiting plates 142. A minimum distance L2 between one of the two limiting plates 142 and the bottom plate 141 is equal to a maximum distance L6 between the other limiting plate 142 and the bottom plate 141. A minimum distance L4 between the other limiting plate 142 and the bottom plate 141 is greater than 0. The other limiting plate 142 is disposed at an end that is of the guide rail 140 and that is away from the cabinet door. An included angle ∠2 between the limiting plate 142 located at a tail of the guide rail 140 and the horizontal plane at which the Y direction is located is an acute angle, so that an accommodation space shaped like a wedge is formed between the limiting plate 142 located at the tail of the guide rail 140 and the bottom plate 141. ∠1 and ∠2 may have an equal size, so that a manufacturing process of the limiting block 220 of the guide rail 140 and the battery pack 200 can be simplified.

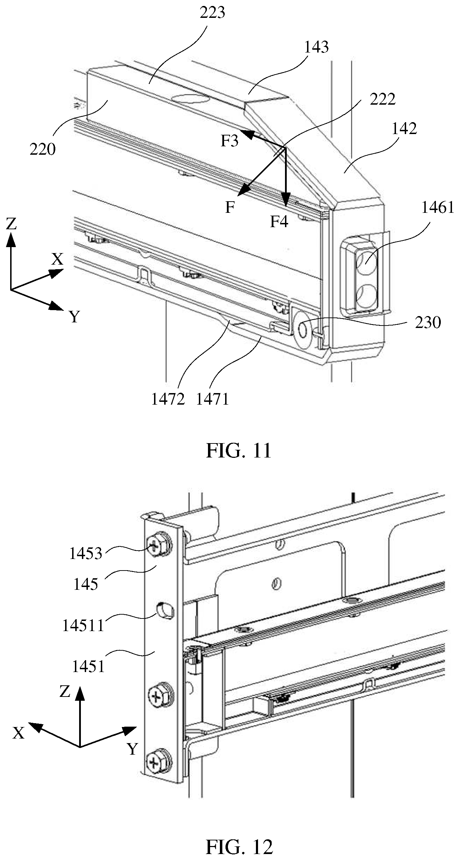

Correspondingly, one limiting block 220 may be disposed at a tail of the side wall of the battery pack 200, and the limiting block 220 includes a first top surface 223 and a limiting surface 222. For the limiting block 220 of the battery pack 200, refer to FIG. 11. FIG. 11 is a cross-sectional view of a guide rail 140 and a battery pack 200 when the battery pack 200 is installed at a position C in FIG. 4. After the battery pack 200 is installed at a proper position, the limiting plate 142 located at the tail of the guide rail 140, the limiting block 220 located at the tail of the side wall of the battery pack 200 abuts against and the limiting plate 142 located at the tail of the guide rail 140. The limiting plate 142 provides the limiting surface 222 with a component force F3 in a reverse direction of the Y direction and a component force F4 in a reverse direction of the Z direction, so that vibration of the battery pack 200 in the Y direction and the Z direction is limited. In other words, one limiting plate 142 is disposed in the middle of the guide rail 140 and one limiting plate 142 is disposed at the tail of the guide rail 140 respectively. Matching structures are formed between the guide rail 140 and the limiting block 220 of the battery pack 200 in the middle and at the tail of the guide rail 140 respectively, to form a plurality of limiting positions, so that the battery pack 200 is locked inside the energy storage cabinet 100. This facilitates convenient installation of the battery pack 200, ensures a stable installation position of the battery pack 200, and enhances stability of the energy storage cabinet 100.

It should be understood that, to further enhance firmness of the battery pack 200 in the energy storage cabinet 100, a plurality of limiting plates 142 may be disposed in the guide rail 140. Correspondingly, a plurality of limiting blocks 220 are disposed on the battery pack 200, so that a plurality of limiting structures are formed between the guide rail 140 and the battery pack 200.

Refer to FIG. 8 and FIG. 9. To improve installation efficiency of the battery pack 200, a pulley 230 may be disposed on a bottom wall of the battery pack 200. The pulley 230 can reduce friction between the bottom wall of the battery pack 200 and the bottom plate 141, reduce a rate of wear between the battery pack 200 and the guide rail 140, and improve the installation efficiency. Correspondingly, the bottom plate 141 is provided with a limiting groove 147. The limiting groove 147 is recessed toward a side that is of the bottom plate 141 and that is away from the bottom wall of the battery pack 200. The limiting groove 147 may accommodate the pulley 230. A depth L5 of the limiting groove is greater than or equal to a height 2r by which the pulley 230 protrudes from the bottom wall of the battery pack 200. The limiting groove 147 may provide accommodation space for the pulley 230, and the bottom wall of the battery pack 200 is attached to the bottom plate 141 of the guide rail 140. This avoids presence of a gap between the bottom wall of the battery pack 200 and the bottom plate 141 of the groove 141 due to the pulley 230, thereby avoiding tilt of the battery pack 200.

Refer to FIG. 8. The limiting groove 147 includes a bottom wall and two side walls. The bottom wall is connected between the two side walls. An included angle between one side wall 1472 in the two side walls and the bottom wall 1471 is an obtuse angle, and the other side wall is closer to the baffle 146 than the side wall 1472 in the two side walls. During installation of the battery pack 200 into the energy storage cabinet 100, the pulley 230 rolls through the tilted side wall 1472 to the bottom wall 1471, so that the pulley 230 enters the limiting groove 147. This ensures that the battery pack 200 moves smoothly, thereby avoiding damage to the battery pack 200 and the guide rail 140. When the battery pack 200 is pulled out from the energy storage cabinet 100, the pulley 230 rolls through the tilted side wall 1472 to the bottom plate 141, so that the pulley 230 exits the limiting groove 147. This ensures that the battery pack 200 can be easily pulled out.

It should be noted that a plurality of pulleys 230 or only one pulley 230 may be disposed on the bottom wall of the battery pack 200. When only one pulley 230 is disposed on the bottom wall of the battery pack 200, the pulley 230 is disposed on an edge that is of the bottom wall of the battery pack 200 and that is close to a rear wall 226 of the battery pack 200. When the battery pack 200 has a plurality of pulleys 230, the bottom plate 141 of the guide rail 140 correspondingly has a plurality of limiting grooves 147, and the plurality of limiting grooves 147 one-to-one accommodate the plurality of pulleys 230.

Still refer to FIG. 11. Each guide rail 140 includes a baffle 146. The baffle 146 is disposed in parallel with the rear wall 226 of the battery pack 200. The baffle 146 is located at the other end that is of the guide rail 140 and that is away from the cabinet door, that is, the baffle 146 is located at the tail of the guide rail 140. After the battery pack 200 slides to a proper position, a blocking force is provided for the battery pack 200. This can prevent the battery pack 200 from continuing to slide in the Y direction, colliding with the rear wall 226 of the energy storage cabinet 100, and damaging the rear wall 226 of the energy storage cabinet 100.

Further, the baffle 146 is provided with a positioning hole 1461. In other words, a positioning pin 227 is disposed on the rear wall 226 of the battery pack 200, and the positioning pin 227 passes through the positioning hole 1461. An orthographic projection of the positioning hole 1461 in the Y direction covers an orthographic projection of the positioning pin 227 in the Y direction. A hole diameter of the positioning hole 1461 is greater than or equal to a diameter of the positioning pin 227. A ground axis of the positioning hole 1461 is parallel to the Y direction. The positioning hole 1461 provides a binding force in a circumferential direction for the positioning pin 227 on the rear wall 226 of the battery pack 200, thereby further limiting vibration of the battery pack 200 during transportation, and enhancing a fastening force between the battery pack 200 and the guide rail 140.

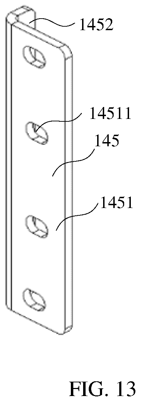

After the battery pack 200 is installed in the guide rail 140, a fastening measure needs to be taken on a front wall 225 of the battery pack 200. The front wall 225 of the battery pack 200 faces the cabinet door. In this way, the front wall 225 may be fastened to the cabinet door. The battery pack 200 may be fastened by using a fixing piece 145. The fixing piece 145 is located at an end that is of the guide rail 140 and that is close to the cabinet door. The fixing piece 145 is separately fastened to a side wall that is of the battery pack 200 and that faces the cabinet door and the guide rail 140. For a position and a structure of the fixing piece 145, refer to FIG. 12 and FIG. 13. FIG. 12 is a diagram of assembling a fixing piece 145 and a guide rail 140 when a battery pack 200 is installed at a position A in FIG. 4. FIG. 13 is a diagram of a structure of a fixing piece 145. The fixing piece 145 includes a first bending part 1451 and a second bending part 1452. The first bending part 1451 is perpendicular to the second bending part 1452. The second bending part 1452 may be connected to a side wall of the energy storage cabinet 100 to fasten the fixing piece 145 to the energy storage cabinet 100. The first bending part 1451 is parallel to a front wall 225 of the battery pack 200. The first bending part 1451 is provided with a plurality of screw holes 14511. Positions that are on the front wall 225 of the battery pack 200 and that correspond to the plurality of screw holes 14511 of the first bending part 1451 are provided with a plurality of screw holes 14511. After the battery pack 200 is installed at a proper position, the battery pack 200 may be fastened to the energy storage cabinet 100 through cooperation of a screw 1453 and a stud.

The guide rail 140 includes a side plate 148. The side plate 148 extends in the width direction. The side plate 148 is perpendicular to and connected to the bottom plate 141 and the limiting plate 142. In other words, a cross-sectional shape of the guide rail 140 in the Z direction may be C-shaped. The guide rail 140 has superior strength and rigidity as a whole, so that the guide rail 140 is not prone to deformation, allowing for more stable support and limiting for the battery pack 200. During specific implementation, the guide rail 140 may be integrally formed, or the guide rail 140 may be divided into a plurality of segments in a Y direction for separate processing, and then the plurality of segments are assembled and formed. When the guide rail 140 is integrally formed, the guide rail 140 may be formed by welding bent sheet metal.

The side plate 148 is provided with a plurality of through holes 1481, and the plurality of through holes 1481 are sequentially provided at spacings in the width direction. An overall weight of the guide rail 140 can be reduced through disposition of the through hole 1481, without affecting overall strength of the guide rail 140.

The cabinet body 110 includes a plurality of columns of posts 150 arranged at spacings in the length direction. Each column of posts 150 includes a plurality of posts 150. The plurality of posts 150 extend in the Z direction. A plurality of battery packs 200 are stacked between two adjacent columns of posts 150. A plurality of guide rails 140 are respectively disposed on the two adjacent columns of posts 150. The guide rails 140 on each of the two adjacent columns of posts 150 are mirror-symmetric in the length direction. The plurality of guide rails 140 are configured to fasten the plurality of battery packs 200. The side plate 148 is fastened to the plurality of posts 150. The post 150 provides support that is vertical to a horizontal plane for the guide rail 140, thereby supporting the battery pack 200 on the horizontal plane. FIG. 3 shows an example in which three pairs of mirror-symmetric guide rails 140 are disposed inside the cabinet body 110, and the three pairs of mirror-symmetric guide rails 140 may carry three battery packs 200.

Based on a same inventive concept, an embodiment of this application further provides an energy storage system. For an application scenario of the energy storage system, refer to FIG. 1. The energy storage system includes the energy storage cabinet 100 and a power converter. The power converter is configured to: convert an alternating current output by an external alternating current power supply into a direct current, and output the direct current to the energy storage cabinet 100; and/or the power converter is configured to: convert a direct current output by the energy storage cabinet 100 into an alternating current, and output the alternating current to a load or a power grid.

Based on a same inventive concept, an embodiment of this application further provides a battery support. For a structure of the battery support, refer to FIG. 4, FIG. 7, and FIG. 8. The battery support includes two guide rails 140 that are mirror-symmetric in a first direction (X direction). Each of the two guide rails 140 extends in a second direction (Y direction). Each guide rail 140 includes a top plate, a limiting plate 142, and a bottom plate 141. The top plate and the bottom plate 141 are disposed in parallel with each other in a third direction. In the energy storage cabinet 100, a position of the limiting plate 142 and a position of the top plate are higher than a position of the bottom plate 141 in the third direction (Z direction). The limiting plate 142 is connected to the top plate. The limiting plate 142 tilts toward the bottom plate 141. A maximum distance L3 between the limiting plate 142 and the bottom plate 141 is equal to a distance L1 between the bottom plate 141 and the top plate. A minimum distance L2 between the limiting plate 142 and the bottom plate 141 is greater than 0. The first direction, the second direction, and the third direction are perpendicular to each other.

"A plurality of" in this application means two or more. The term "and/or" describes an association relationship between associated objects, and indicates that three relationships may exist. For example, A and/or B may indicate the following cases: Only A exists, both A and B exist, and only B exists, where A and B may be singular or plural.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely specific implementations of this application, but are not intended to limit the protection scope of this application. Any variation or replacement readily figured out by a person skilled in the art within the technical scope disclosed in this application shall be within the protection scope of this application.

## Claims

1. An energy storage cabinet, wherein the energy storage cabinet comprises a cabinet body, a battery pack, and two guide rails disposed opposite to each other in a length direction of the cabinet body, the cabinet body is configured to accommodate the guide rail and the battery pack, the cabinet body is provided with a cabinet door, and the two guide rails extend in a width direction of the cabinet body;
each of the two guide rails is provided with a groove extending in the width direction, and openings of the grooves are opposite to each other and face the cabinet body; and
an opening width that is of the groove in a height direction of the cabinet body and that is at one end of the guide rail close to the cabinet door is greater than an opening width that is of the groove and that is at the other end of the guide rail, protruding limiting blocks are disposed on surfaces of two side walls of the battery pack, the limiting blocks are clamped into the groove, and a portion that is of the groove and at which the opening width narrows is configured to abut against the limiting block in the width direction.

2. The energy storage cabinet according to claim 1, wherein an orthographic projection of the groove in the length direction is step-shaped, and an orthographic projection of the limiting block in the length direction is step-shaped.

3. The energy storage cabinet according to claim 1 or 2, wherein the portion that is of the groove and at which the opening width narrows is configured to abut against the limiting block in the height direction.

4. The energy storage cabinet according to any one of claims 1 to 3, wherein the energy storage cabinet comprises a fixing piece, the fixing piece is located at the one end that is of the guide rail and that is close to the cabinet door, and the fixing piece is separately fastened to the guide rail and a side wall that is of the battery pack and that faces the cabinet door.

5. The energy storage cabinet according to claim 3 or 4, wherein each guide rail comprises a baffle, the baffle is disposed in parallel with a rear wall of the battery pack, the baffle is located at the other end that is of the guide rail and that is away from the cabinet door, and the baffle is provided with a positioning hole; and
a positioning pin is disposed on a side wall that is of the battery pack and that faces the baffle, and the positioning pin passes through the positioning hole.

6. The energy storage cabinet according to any one of claims 1 to 5, wherein the guide rail comprises a bottom plate, a first top plate, and a limiting plate; the first top plate and the bottom plate are disposed in parallel with each other in the height direction; in each guide rail, a position of the first top plate and a position of the limiting plate are higher than a position of the bottom plate in the height direction; the first top plate is connected to the limiting plate; the limiting plate tilts toward the bottom plate; and a maximum distance between the limiting plate and the bottom plate is equal to a distance between the first top plate and the bottom plate;
the limiting block is located between the limiting plate and the first top plate; the limiting block comprises a bottom surface and a limiting surface; the bottom surface is parallel to the bottom plate; in the limiting block, a position of the limiting surface is higher than a position of the bottom surface in the height direction; and the limiting surface and the limiting plate are disposed in parallel with each other; and
a minimum distance between the limiting plate and the bottom plate is greater than or equal to a minimum distance between the limiting surface and the bottom plate.

7. The energy storage cabinet according to claim 6, wherein a compression member is disposed between the limiting plate and the limiting surface.

8. The energy storage cabinet according to claim 6 or 7, wherein the limiting block comprises a first top surface, the first top surface is disposed opposite to the first top plate, the first top surface is connected to the limiting surface, and a distance between the first top surface and the bottom surface is equal to a maximum distance between the limiting surface and the bottom surface.

9. The energy storage cabinet according to any one of claims 6 to 8, wherein the guide rail comprises a second top plate, the second top plate is connected to the limiting plate, the second top plate and the bottom plate are disposed in parallel with each other, a distance between the second top plate and the bottom plate is less than the distance between the first top plate and the bottom plate, and an orthographic projection of the limiting plate in the height direction is located between an orthographic projection of the first top plate in the height direction and an orthographic projection of the second top plate in the height direction.

10. The energy storage cabinet according to claim 9, wherein the limiting block comprises a second top surface, the second top surface is located between the second top plate and the bottom plate, the second top surface is connected to the limiting surface, the second top surface and the bottom surface are disposed in parallel with each other, a distance between the second top surface and the bottom surface is less than a distance between the third limiting surface and the bottom surface, and the orthographic projection of the limiting plate in the height direction covers an orthographic projection of the limiting surface in the height direction.

11. The energy storage cabinet according to any one of claims 6 to 10, wherein the guide rail comprises two limiting plates, the two limiting plates are sequentially arranged in the width direction, the second top plate is connected between the two limiting plates, and a minimum distance between one of the two limiting plates and the bottom plate is equal to a maximum distance between the other limiting plate and the bottom plate.

12. The energy storage cabinet according to claim 11, wherein the other limiting plate is disposed at the end that is of the guide rail and that is away from the cabinet door.

13. The energy storage cabinet according to any one of claims 6 to 12, wherein the guide rail comprises a side plate, the side plate extends in the width direction, the side plate is perpendicular to and connected to the bottom plate and the limiting plate, the side plate is provided with a plurality of through holes, and the plurality of through holes are sequentially provided in the width direction.

14. The energy storage cabinet according to any one of claims 6 to 13, wherein a pulley is disposed on a bottom wall of the battery pack, the bottom plate is provided with a limiting groove, the limiting groove is recessed toward a side that is of the bottom plate and that is away from the bottom wall of the battery pack, the limiting groove is configured to accommodate the pulley, and a depth of the limiting groove is greater than or equal to a height by which the pulley protrudes from the bottom wall of the battery pack.

15. The energy storage cabinet according to claim 14, wherein the limiting groove comprises a bottom wall and two side walls, the bottom wall is connected between the two side walls, an included angle between one side wall in the two side walls and the bottom wall is an obtuse angle, and the other side wall is closer to the baffle than the one side wall in the two side walls.

16. The energy storage cabinet according to claim 10 or 11, wherein the pulley is disposed on an edge that is of a bottom wall of the battery pack and that is close to the rear wall of the battery pack.

17. The energy storage cabinet according to claim 13, wherein the cabinet body comprises a plurality of columns of posts arranged at spacings in the length direction, each column of posts comprises a plurality of posts, the plurality of posts extend in the height direction, and a plurality of battery packs are stacked between two adjacent columns of posts; and
a plurality of guide rails are disposed on each of the two adjacent columns of posts, the guide rails on the two adjacent columns of posts are mirror-symmetric in the length direction, the plurality of guide rails are configured to fasten the plurality of battery packs, and the side plate is fastened to the plurality of posts.

18. An energy storage system, wherein the energy storage system comprises the energy storage cabinet according to any one of claims 1 to 17 and a power converter; and the power converter is configured to: convert an alternating current output by an external alternating current power supply into a direct current, and output the direct current to the energy storage cabinet; and/or the power converter is configured to: convert a direct current output by the energy storage cabinet into an alternating current, and output the alternating current to a load or a power grid.

19. A battery pack, wherein the battery pack comprises a housing and a plurality of batteries; the housing is configured to accommodate the plurality of batteries; a limiting block is disposed on an outer wall of the housing; the limiting block comprises a bottom surface and a limiting surface; in the battery pack, a position of the limiting surface is higher than a position of the bottom surface in a height direction of the battery pack; and the limiting surface tilts toward the bottom surface.

20. The battery pack according to claim 19, wherein the limiting block comprises a first top surface, the first top surface and the bottom surface are disposed in parallel with each other in the height direction, the first top surface is connected to the limiting surface, and a distance between the first top surface and the bottom surface is equal to a maximum distance between the first top surface and the limiting surface and the bottom surface.

21. The battery pack according to claim 20, wherein the limiting block comprises a second top surface, the second top surface is connected to the limiting surface, the second top surface and the bottom surface are disposed in parallel with each other, and a distance between the second top surface and the bottom surface is less than a distance between the third limiting surface and the bottom surface.

22. A battery support, wherein the battery support comprises two guide rails that are mirror-symmetric in a first direction; each of the two guide rails extends in a second direction; each of the two guide rails comprises a top plate, a limiting plate, and a bottom plate; the top plate and the bottom plate are disposed in parallel with each other in a third direction; in the energy storage cabinet, a position of the limiting plate and a position of the top plate are higher than a position of the bottom plate in the third direction; the limiting plate is connected to the top plate; the limiting plate tilts toward the bottom plate; a maximum distance between the limiting plate and the bottom plate is equal to a distance between the bottom plate and the top plate; a minimum distance between the limiting plate and the bottom plate is greater than 0; and the first direction, the second direction, and the third direction are perpendicular to each other.
